(19) Europäisches Patentamt
European Patent Office
Office européen des brevets

(11) **EP 2 403 106 A2**

(12) **DEMANDE DE BREVET EUROPEEN**

(43) Date de publication:
**04.01.2012 Bulletin 2012/01**

(51) Int Cl.:
*H02J 7/34* (2006.01)        *H02J 7/35* (2006.01)
*G01G 19/00* (2006.01)

(21) Numéro de dépôt: **11305805.1**

(22) Date de dépôt: **24.06.2011**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**

(30) Priorité: **02.07.2010 FR 1055372**

(71) Demandeur: **SEB S.A.**
**69130 Ecully (FR)**

(72) Inventeurs:
• **Caregnato, Stéphane**
**74150 BLOYE (FR)**

• **Linglin, Benoît**
**74350 CRUSEILLES (FR)**
• **Chaumontet, Gilles**
**74150 ETERCY (FR)**

(74) Mandataire: **Guéry-Jacques, Géraldine**
**SEB Développement
Service Propriété Industrielle
Les 4 M -
Chemin du Petit Bois - B.P. 172
69134 Ecully Cedex (FR)**

(54) **Dispositif d'alimentation d'une unité électronique de mesure et appareil électronique de mesure équipé d'un tel dispositif**

(57) L'invention concerne un appareil électronique de mesure d'une grandeur physique dans le petit équipement domestique portatif par exemple le poids, comprenant au moins un générateur d'électricité photovoltaïque (6), une unité électronique de mesure (4) et au moins un capteur de mesure (3) raccordé à l'unité électronique de mesure (4), caractérisé en ce qu'il comprend un dispositif d'alimentation (10) de l'unité électronique de mesure (4), ce dispositif comprenant une entrée (11) destinée à être raccordée à un générateur photovoltaïque (6), une sortie d'alimentation (12) destinée à être raccordée à l'unité électronique de mesure (4), et, entre l'entrée (11) et la sortie d'alimentation (12), au moins un accumulateur bipolaire d'énergie électrique (13), caractérisé en ce qu'il comprend, entre l'accumulateur (13) et la sortie d'alimentation (12), un interrupteur commandé (15) qui est piloté par une unité de commande (14) adaptée pour comparer une première image de la tension aux bornes de l'accumulateur (13) à une deuxième image de la tension aux bornes de l'accumulateur (13), la deuxième image étant retardée par rapport à la première image, piloter la fermeture de l'interrupteur (15) lorsque la valeur de la deuxième image est supérieure ou égale à la valeur de première image.

FIG.2

EP 2 403 106 A2

## Description

La présente invention concerne le domaine technique des dispositifs électroniques de mesure utilisés pour déterminer la valeur d'une grandeur physique et plus particulièrement le domaine des dispositifs électroniques de mesure alimentés en partie au moins par des cellules solaires. Dans une application préférée mais non exclusive, l'invention se rapporte aux dispositifs de mesures destinés à un usage ménager tels que par exemple les thermomètres électroniques ou les balances ménagères utilisées en cuisine ou encore comme pèse-personne.

Un dispositif électronique de pesée comprend généralement, comme cela est décrit par la demande WO2008/009794 dans le domaine des balances ménagères, un plateau destiné à recevoir la charge à peser et un socle destiné à reposer sur un support tel que le sol dans le cas d'un pèse personne ou un dessus de table ou de meuble pour une balance de cuisine. Le dispositif électronique de pesée comprend en outre au moins un et, généralement, entre trois et quatre capteurs de poids qui sont interposés entre le plateau et le socle et qui sont raccordés électriquement à une unité électronique de mesure adaptée pour déterminer en fonction des informations fournies par les capteurs la valeur de la masse ou du poids de la charge appliquée sur le plateau. L'unité électronique de mesure comprend alors un afficheur permettant à l'utilisateur du dispositif de mesure de lire la valeur mesurée. L'alimentation de l'unité électronique de mesure est assurée par un ou plusieurs accumulateurs électrochimiques communément appelés piles.

Or, l'usage de telles piles ou accumulateurs électrochimiques pose un problème environnemental dans la mesure où il est nécessaire de les recycler selon une filière particulière compte tenu du caractère polluant de leurs composants. Ainsi, afin de s'affranchir des piles électrochimiques il a été proposé d'alimenter l'électronique de mesure au moyen d'un générateur photovoltaïque plus communément appelé cellule solaire. Cependant, un tel générateur photovoltaïque est très sensible aux conditions d'éclairage et aux variations lumineuses de sorte qu'il n'est pas toujours en mesure de délivrer un courant instantané suffisant pendant la durée nécessaire pour que l'électronique de mesure puisse réaliser une mesure fiable.

Il est donc apparu le besoin d'un dispositif d'alimentation qui soit susceptible de garantir la qualité et la quantité d'énergie électrique nécessaire à la réalisation d'une mesure fiable.

Afin d'atteindre cet objectif, l'invention concerne un dispositif d'alimentation d'une unité électronique de mesure notamment dans le domaine du petit équipement domestique portatif.. Ce dispositif d'alimentation comprend:

- une entrée destinée à être raccordée à un générateur photovoltaïque

- une sortie d'alimentation destinée à être raccordée à l'unité électronique de mesure,

- et, entre l'entrée et la sortie d'alimentation, au moins un accumulateur bipolaire d'énergie électrique.

Selon l'invention, le dispositif d'alimentation comprend en outre, entre l'accumulateur et la sortie d'alimentation, un interrupteur commandé qui est piloté par une unité de commande adaptée pour :

- comparer une première image de la tension aux bornes de l'accumulateur à une deuxième image de la tension aux bornes de l'accumulateur, la deuxième image étant retardée par rapport à la première image,

- piloter la fermeture de l'interrupteur lorsque la valeur de la deuxième image est supérieure ou égale à la valeur de la première image.

Ainsi, l'invention permet de déclencher l'alimentation uniquement lorsque la tension aux bornes de l'accumulateur a atteint une valeur qui garantit que la quantité d'énergie emmagasinée par l'accumulateur est suffisante pour réaliser une mesure fiable ou encore que le générateur photovoltaïque est dans une phase de fonctionnement stable.

Selon l'invention, l'accumulateur peut-être de toute nature appropriée. Dans une forme de réalisation préférée mais non strictement nécessaire l'accumulateur sera de type capacitif et ; par exemple, constitué d'un ou plusieurs condensateurs et sera adapté pour emmagasiner l'énergie suffisante pour assurer une durée d'alimentation de l'électronique de mesure de l'ordre d'une minute ou de quelques minutes. Ainsi, l'invention permet de s'affranchir de l'utilisation de piles de grandes capacités qui doivent être rechargées ou changées qui dans tous les cas posent un problème de recyclage en fin de durée de vie.

Selon une caractéristique de l'invention, l'interrupteur commandé est adapté pour être ouvert lorsqu'il est au repos et/ou que la tension à l'entrée ou aux bornes de l'accumulateur est nulle ou inférieure à un seuil prédéterminé. Ainsi, lorsque l'accumulateur est vide ou que les conditions d'éclairage ne permettent pas au générateur photovoltaïque de fournir l'énergie suffisante à une mesure fiable, l'interrupteur s'ouvre automatiquement ce qui permet à l'accumulateur de se recharger jusqu'à ce qu'il accumule l'énergie nécessaire à une mesure fiable.

Selon une autre caractéristique de l'invention, l'unité de commande est alimentée par l'entrée et/ou l'accumulateur de sorte que le dispositif d'alimentation selon l'invention et le générateur photovoltaïque qui lui est raccordé forment un ensemble complètement autonome.

Selon l'invention, l'unité de commande du dispositif d'alimentation peut être réalisée de toutes manières appropriées. Selon une forme de réalisation de l'invention, l'unité de commande comprend :

- un comparateur avec deux entrées et une sortie, la sortie du comparateur étant raccordée à l'interrupteur commandé,

- une première cellule diviseuse raccordée aux bornes de l'accumulateur et à une première entrée du comparateur,

- une deuxième cellule diviseuse associée à une cellule retard et raccordée aux bornes de l'accumulateur et à la deuxième entrée du comparateur.

Une telle forme de réalisation permet d'obtenir une unité de commande simple et peu consommatrice d'énergie.

La consommation du système de démarrage peu encore être abaissée par l'ajout d'un transistor de commande en amont du comparateur.

Selon une variante de cette forme de réalisation, la deuxième cellule diviseuse possède un coefficient diviseur inférieur à celui de la première cellule. cette relation entre les coefficients diviseurs permet de garantir que la différence entre les tensions à l'entrée du comparateur est suffisante pour assurer le changement d'état du comparateur. Le coefficient diviseur de la deuxième cellule diviseuse pourra par exemple valoir 20 à 30% du coefficient diviseur de la première cellule de manière à concevoir les diviseurs avec des résistances standard, de précision 5%, tout en garantissant le fonctionnement du système.

Afin de garantir la qualité de l'alimentation disponible en sortie, selon une caractéristique de l'invention, le dispositif d'alimentation comprend, entre l'interrupteur commandé et la sortie d'alimentation, un régulateur de tension et/ou de courant.

L'invention concerne également un appareil électronique de mesure d'une grandeur physique notamment dans le domaine du petit équipement domestique portatif. Cet appareil comprend au moins un générateur d'électricité photovoltaïque, une unité électronique de mesure et au moins un capteur de mesure raccordé à l'unité électronique de mesure. L'appareil électronique de mesure est alors caractérisé en ce qu'il comprend un dispositif d'alimentation selon l'invention dont l'entrée est raccordée au générateur d'électricité et la sortie d'alimentation à l'unité électronique de mesure.

Selon une caractéristique de l'invention, le dispositif d'alimentation comprend au moins une sortie de surveillance de la tension disponible à l'entrée et/ou aux bornes de l'accumulateur. Cette sortie de surveillance peut alors être raccordée à l'unité électronique de mesure qui sera alors adaptée pour émettre un signal visuel et/ou sonore si la tension surveillée devient inférieure à un seuil prédéterminé. Ce signal pourra alors informer l'utilisateur de l'appareil de mesure d'un arrêt de fonctionnement imminent. L'unité électronique de mesure pourra être adaptée pour changer le mode de fonctionnement voire arrêter le fonctionnement si la tension surveillée devient inférieure à un ou plusieurs seuils prédéterminés.

Selon l'invention chaque capteur de mesure peut être de toute nature appropriée en fonction de la grandeur physique à mesurer.

Selon une forme de réalisation de l'appareil de mesure conforme à l'invention, chaque capteur de mesure est un capteur à transducteur résistif et l'unité électronique de mesure est adaptée pour déterminer la variation de la résistance électrique de chaque transducteur résistif de chaque capteur en fonction du temps de charge ou décharge d'un condensateur de capacité connue au travers du transducteur résistif pour déterminer en fonction des variations de résistance déterminées la valeur de la grandeur physique mesurée. Dans le cas par exemple de la mesure de poids ou de masse, la mise en oeuvre de capteurs à transducteur résistif permet de réduire les coûts de production de l'appareil électronique de pesée par opposition à l'utilisation de capteurs à transducteur capacitif. Par ailleurs, la mise en oeuvre de mesure des résistances électriques par détermination du temps de charge d'un condensateur de capacité connue au travers du transducteur résistif à mesurer permet de réduire substantiellement l'énergie nécessaire à la réalisation d'une mesure fiable par rapport à une mesure qui serait réalisée par la mise en oeuvre de ponts de Wheastone et d'une technique de conversion analogique digitale conventionnelle qui impose des courants de fonctionnement et de mesure bien plus importants (d'un facteur 50 à 100) que ceux imposés par le système de mesure du temps de décharge.

Il doit être remarqué que les capteurs à transducteur résistif ne sont pas limités à la mesure de poids mais peuvent également être utilisés, après redimensionnement éventuel, pour la mesure de température, de pression ou de couple.

Selon une variante de la forme de réalisation mettant en oeuvre des capteurs résistifs, l'appareil électronique de mesure est adapté pour réaliser au moins une pesée. L'appareil électronique de mesure comprend alors :

- au moins un plateau de mesure,

- au moins un socle,

- au moins trois capteurs de mesure de poids à jauge extensométrique résistive qui sont interposés entre le plateau de mesure et le socle et qui sont équipés de moyen de raccordement électrique des jauges extensométriques à l'unité électronique de mesure qui est adaptée pour déterminer, en fonction des valeurs de résistance déterminées, la valeur de la charge appliquée au plateau.

Selon une caractéristique de l'invention, cet appareil électronique de mesure, dit de pesée, comprend un unique plateau de mesure et au moins trois socles formant chacun un pied, chaque socle étant associé à un capteur de mesure de poids.

Selon une autre caractéristique de l'invention, le plateau de mesure comprend au moins une fenêtre transparente sous laquelle est disposé un générateur photovoltaïque.

Selon encore une autre caractéristique de l'invention, le plateau de mesure est réalisé en verre. La mise en oeuvre d'un tel plateau de mesure permet à la fois d'obtenir une bonne rigidité du plateau et un aspect esthétique flatteur.

Selon une autre caractéristique de l'invention, l'appareil électronique de mesure peut être une balance de cuisine dont la pesée maximale est de 5kg, ou un pèse-personne dont la pesée maximale est de 160kg, ou encore un appareil où la mesure est une mesure de température corporelle, par exemple un thermomètre qui peut être un thermomètre auriculaire.

Bien entendu, les différentes caractéristiques, formes et variantes de réalisation de l'invention peuvent être associées les unes avec les autres selon diverses combinaisons dans la mesure où elles ne sont pas incompatibles ou exclusives les unes des autres.

Par ailleurs, diverses autres caractéristiques de l'invention ressortent de la description annexée effectuée en référence aux dessins qui illustrent une forme non limitative de réalisation d'un dispositif d'alimentation conforme à l'invention et d'un appareil électronique de mesure mettant en oeuvre un tel dispositif d'alimentation.

- La figure 1 est une perspective schématique d'un appareil électronique de mesure selon l'invention formant un pèse-personne.

- La figure 2 est une vue schématique de l'électronique mise en oeuvre par l'appareil électronique de mesure illustré à la figure 1.

- La figure 3 correspond au schéma électronique d'une forme de réalisation d'un dispositif d'alimentation conforme à l'invention.

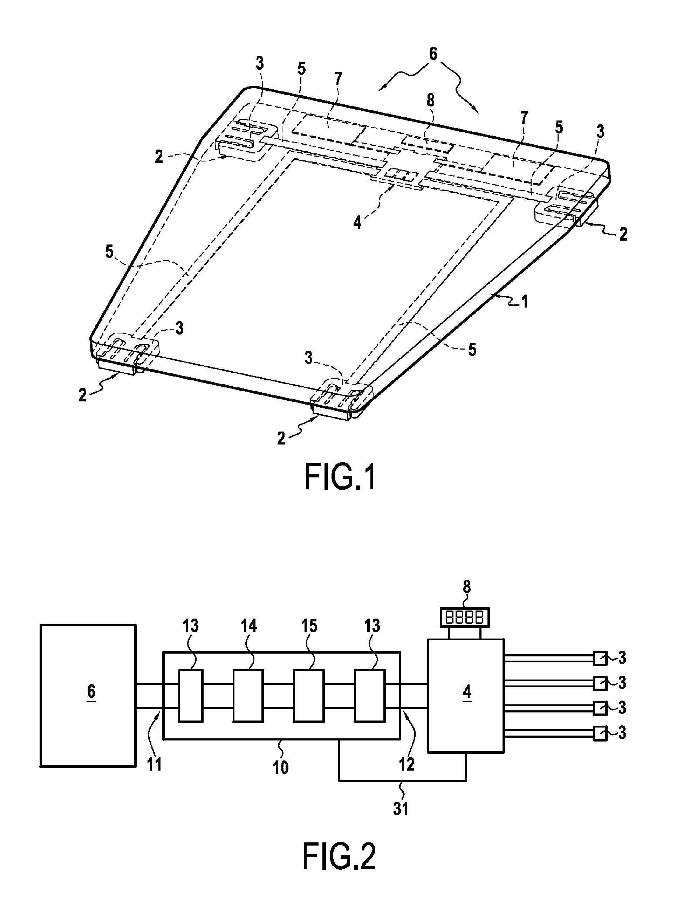

L'appareil électronique de mesure, selon l'invention, tel qu'illustré à la figure 1 est plus particulièrement destiné à la pesée. Bien entendu, il ne s'agit là que d'une application possible et non limitative de l'invention. Un tel appareil électronique de mesure ou pesée comprend, au moins un plateau de mesure 1 et au moins un socle 2. Selon l'exemple illustré, l'appareil électronique de pesée comprend un seul plateau 1 en verre et quatre socles ou pieds 2 qui définissent chacun, avec le plateau, un boîtier à l'intérieur duquel est disposé un capteur de mesure 3. Les capteurs de mesure 3 sont chacun interposé entre le plateau et le socle correspondant. L'appareil électronique de mesure comprend une unité électronique de mesures 4 fixée sous le plateau et reliée aux capteurs 3 par des câbles électriques 5.

Chaque capteur de force 3 est dans le cas présent formé par un capteur de poids à jauges extensométriques résistives tel que décrit par exemple dans la demande WO2008/00 9794 de sorte qu'il n'est pas nécessaire de le décrire ici plus longuement.

L'appareil électronique de mesure selon l'invention se distingue toutefois de celui décrit à la demande WO2008/00 9794 en ce que la détermination de la charge du plateau de mesure 1 ne s'effectue pas par mesure de la variation de résistance d'un demi pont de Wheastone mais par la mesure directe de la résistance électrique de chaque jauge extensométrique de chaque capteur 3. L'unité électronique de mesure 4 est donc adaptée pour mesurer la résistance électrique de chaque jauge extensométrique résistive de chaque capteur 3 en fonction du temps de charge ou décharge d'un condensateur de capacité connue au travers de ladite jauge extensométrique, conformément à un procédé de mesure, dit mesure TDC, décrit par les brevets EP 1 251 357 et US 6 690 183.

La mise en oeuvre d'un tel mode de mesure TDC présente l'avantage de permettre de réaliser des mesures fiables avec une faible consommation d'énergie ce qui rend ce mode de mesure particulièrement adaptée à une alimentation par énergie lumineuse naturelle ou artificielle. Ainsi, l'appareil électronique de mesure comprend un générateur photovoltaïque 6 formé, dans le cas présent, de deux cellules 7 disposées de part et d'autre d'un afficheur 8 piloté par l'unité électronique de mesure 4.

Le générateur photovoltaïque 6 est raccordé, comme le montre la figure 2, à un dispositif d'alimentation 10 qui fournit, lorsque cela est possible, l'énergie électrique nécessaire au fonctionnement de l'unité de mesure 4.

Ainsi le dispositif d'alimentation 10 comprend, d'une part, une entrée 11 destinée à être raccordée au générateur photovoltaïque 6 et, d'autre part, une sortie d'alimentation 12 destinée à être raccordée à l'unité électronique de mesure 4. Selon l'exemple illustré, le dispositif d'alimentation 10 comprend au moins un accumulateur bipolaire d'énergie électrique 13 directement raccordé à l'entrée 11 et donc au générateur photovoltaïque 6. Le dispositif d'alimentation comprend également une unité de commande 14 qui pilote un interrupteur commandé 15 situé entre l'accumulateur 13 et la sortie 12.

L'unité de commande 3 est alors adaptée pour :

- comparer une première image de la tension aux bornes de l'accumulateur à une deuxième image de la tension aux bornes de l'accumulateur, la deuxième image étant retardée par rapport à la première image,

- et piloter la fermeture de l'interrupteur 15 lorsque la valeur de la deuxième image est supérieure ou égale à la valeur de la première image. Ceci permet de consommer le moins possible d'énergie en fonctionnement, c'est-à-dire une fraction de ce que peut fournir le générateur photovoltaïque.

Le dispositif d'alimentation 10 peut être réalisé de toutes manières appropriées par la mise en oeuvre de tout composant électronique lui permettant d'assurer les fonctions ci-dessus.

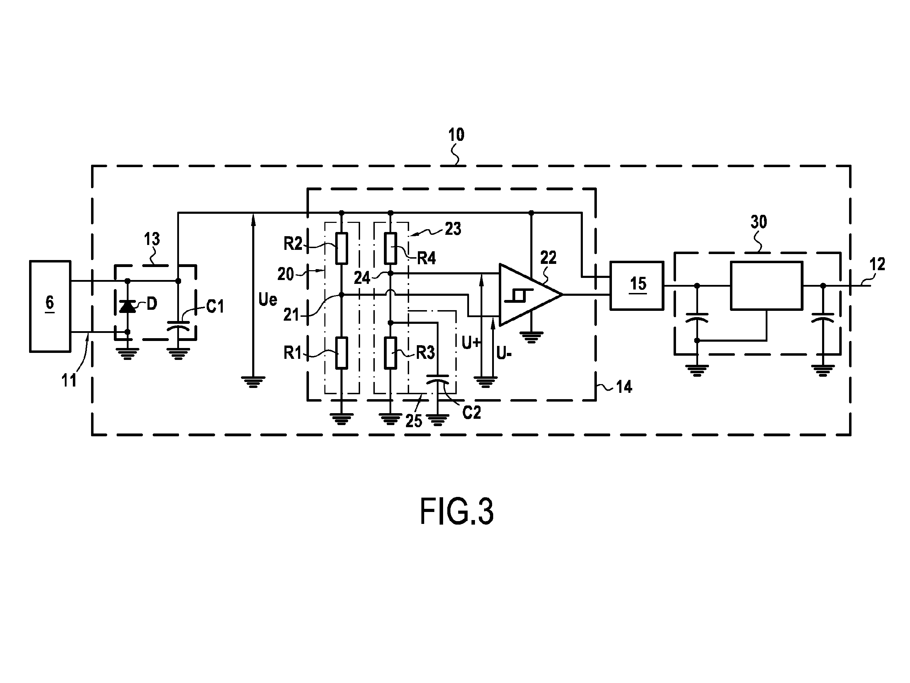

La figure 3 illustre une forme possible de réalisation du dispositif selon laquelle l'accumulateur 13 comprend au moins un condensateur d'une capacité supérieure à 100 $\mu$F et selon l'exemple illustré un seul condensateur C1 d'une capacité de plusieurs centaines de micros farads $\mu$F. selon l'exemple illustré, l'accumulateur 13 comprend également une diode D montée en parallèle avec le condensateur C1. Bien entendu l'accumulateur 13 pourrait comprendre plusieurs condensateurs associés, de préférence mais non exclusivement, en parallèle.

Selon l'exemple de la figure 3, l'unité de commande 14 comprend une première cellule diviseuse 20 montée en parallèle avec l'accumulateur 13. Cette cellule diviseuse comprend deux résistances R1 et R2 montées en série dont le point milieu 21 est raccordé à l'entrée inverseuse (-) d'un comparateur 22. Le comparateur 22 peut être de faible consommation, dépourvu de référence interne. Ainsi la tension $U_-(t)$ au niveau de l'entrée inverseuse (-) est proportionnelle à la tension Ue (t) de sortie de l'accumulateur 13.

$$U_-(t) = aUe(t)$$

Les résistances R1 et R2 ont par exemple une valeur de l'ordre d'une ou plusieurs dizaines de mégas ohms.

L'unité de commande 14 comprend une deuxième cellule diviseuse 23 montée en parallèle avec l'accumulateur 13 et donc la première cellule diviseuse 20. Cette deuxième cellule diviseuse 23 comprend deux résistances R3 et R4 montées en série, dont le point milieu 24 est raccordé à l'entrée non-inverseuse (+) du comparateur 22. De plus, la deuxième cellule diviseuse est associée à une cellule retard 25 comprenant selon l'exemple illustré un condensateur C2 monté en parallèle avec la résistance R3. Ainsi la tension $U_+(t)$ au niveau de l'entrée non-inverseuse (-) est proportionnelle à la tension Ue (t) de sortie de l'accumulateur 13 au décalage temporel T près induit par la cellule retard 25.

$$U_+(t) = b\, Ue(t-\tau)$$

Les résistances R3 et R4 ont des valeurs du même ordre de grandeur que les résistances R1 et R2. Le condensateur C2 aura par exemple une valeur d'une ou plusieurs centaines de fois inférieures et par exemple de l'ordre de quelques micros farads.

La sortie du comparateur 22 est en outre raccordée à l'interrupteur commandé 15.

Le dispositif d'alimentation ainsi constitué fonctionne de la manière suivante.

Lorsque le générateur photovoltaïque n'est pas du tout éclairé, l'interrupteur commandé 15 est ouvert.

Lorsque le générateur photovoltaïque est éclairé, il délivre à ses bornes un courant qui vient charger l'accumulateur 13. Tant que la tension Ue aux bornes de l'accumulateur est inférieure à un seuil de fonctionnement du comparateur 22 alimenté par l'accumulateur 13, le comparateur 22 reste au repos et l'interrupteur commandé 15 reste ouvert. Lorsque la tension Ue dépasse, suite au chargement du condensateur C1, le seuil de fonctionnement du comparateur 22 ce dernier commence à comparer les tensions $U_-(t)$ et $U_+(t)$. Tant que le condensateur C2 n'est pas suffisamment chargé la tension $U_+(t)$ est très inférieure à la tension $U_-(t)$ ensuite les tensions vérifient les relations suivantes :

$$U_-(t) = aUe(t) \text{ et } U_+(t) = b\, Ue(t-\tau)$$

Où a est le coefficient diviseur de la première cellule 20, b le coefficient diviseur de la deuxième cellule 23 et T le retard induit par la cellule retard 25.

Lorsque $U_+(t)$ devient supérieur ou égal à $U_-(t)$ le comparateur 22 bascule et commande la fermeture de l'interrupteur 15.

Les valeurs des résistances R1 à R4 et du condensateur C2 sont choisies pour que cette bascule interviennent à partir du moment où la charge de l'accumulateur 13 est suffisante pour assurer, de façon autonome sans fourniture d'énergie par le générateur photovoltaïque 6 un fonctionnement de l'unité de mesure pendant une durée suffisante pour garantir un confort d'utilisation et par exemple de l'ordre d'une ou de quelques minutes. Les valeurs de résistance pourront par exemple être choisies pour que R1 = R3 tandis que R2= 3(R4)/2.

Afin de garantir une bonne qualité d'alimentation, le dispositif d'alimentation 10 pourra comprendre en aval de l'interrupteur 15 un régulateur 30 de tension et/ou de courant.

La mise en oeuvre d'un tel dispositif d'alimentation permet de manière simple d'alimenter de façon fiable l'unité électronique de mesure qui sera alors à même de remplir sa fonction de détermination de la charge appliquée au plateau de mesures 1.

Afin d'assurer le confort de l'utilisateur et notamment de l'avertir en cas de baisse de l'énergie disponible au niveau de l'accumulateur 13, en dessous d'un seuil critique, le dispositif d'alimentation 10 pourra comprendre une sortie 31 de surveillance du niveau de tension Ue. Cette sortie de surveillance 31 sera raccordée à l'unité de mesure 4 adaptée pour délivrer un signal à un utilisateur du dispositif en cas d'une baisse de la tension Ue en dessous d'un seuil prédéterminé correspondant à un niveau d'énergie disponible au niveau de l'accumulateur 13 trop faible pour maintenir un fonctionnement fiable du dispositif de mesures.

Selon l'invention, le dispositif d'alimentation et l'unité de mesure peuvent être réalisés sous la forme d'un seul circuit intégré ou sous la forme de composants discrets associés les uns les autres ou encore sous la forme d'une combinaison de circuits intégrés et de composants discrets.

Bien entendu, diverses modifications peuvent être apportées à l'appareil de mesures et au dispositif d'alimentation selon l'invention dans le cadre des revendications annexées.

## Revendications

1. Dispositif d'alimentation d'une unité électronique de mesure (4) dans le domaine du petit équipement domestique portatif, dispositif comprenant :

   - une entrée (11) destinée à être raccordée à un générateur photovoltaïque (6),
   - une sortie d'alimentation (12) destinée à être raccordée à l'unité électronique de mesure (4),
   - et, entre l'entrée (11) et la sortie d'alimentation (12), au moins un
   accumulateur bipolaire d'énergie électrique (13),

   **caractérisé en ce que** qu'il comprend, entre l'accumulateur (13) et la sortie d'alimentation (12), un interrupteur commandé (15) qui est piloté par une unité de commande (14) adaptée pour :

   - comparer une première image ($U_-$) de la tension (Ue) aux bornes de l'accumulateur (13) à une deuxième image ($U_+$) de la tension aux bornes de l'accumulateur (13), la deuxième image ($U_+$) étant retardée par rapport à la première image,
   - piloter la fermeture de l'interrupteur (15) lorsque la valeur de la deuxième image ($U_+$) est supérieure ou égale à la valeur de la première image ($U_-$).

2. Dispositif d'alimentation selon la revendication 1, **caractérisé en ce que** l'interrupteur commandé (15) est adapté pour être ouvert lorsqu'il est au repos et/ou que la tension (Ue) à l'entrée ou aux bornes de l'accumulateur est nulle ou inférieure à un seuil prédéterminé.

3. Dispositif d'alimentation selon la revendication 1 ou 2, **caractérisé en ce que** l'unité de commande (14) est alimentée par l'entrée (11) et/ou l'accumulateur (13).

4. Dispositif d'alimentation selon la revendication 3, **caractérisé en ce que** l'unité de commande (14) comprend :

   - un comparateur (22) avec deux entrées (+, -) et une sortie, la sortie du comparateur (22) étant raccordée à l'interrupteur commandé (15),
   - une première cellule diviseuse (20) raccordée aux bornes de l'accumulateur (13) et à une première entrée (-) du comparateur,
   - une deuxième cellule diviseuse (23) associée à une cellule retard (25) et raccordée aux bornes de l'accumulateur (13) et à la deuxième entrée (+) du comparateur.

5. Dispositif d'alimentation selon la revendication 4, **caractérisé en ce que** la deuxième cellule diviseuse (23) possède un coefficient diviseur inférieur à celui de la première cellule (20).

6. Dispositif d'alimentation selon l'une des revendications précédentes, **caractérisé en ce qu'**il comprend, entre l'interrupteur commandé (15) et la sortie d'alimentation (12), un régulateur (30) de tension et/ou de courant.

7. Dispositif d'alimentation selon l'une des revendications précédentes, **caractérisé en ce que** l'accumulateur (13) est un accumulateur capacitif.

8. Dispositif d'alimentation selon l'une des revendications précédentes, **caractérisé en ce qu'**il comprend au moins une sortie (31) de surveillance de la tension (Ue) disponible à l'entrée et/ou aux bornes de l'accumulateur.

9. Appareil électronique de mesure d'une grandeur physique dans le petit équipement domestique portatif, appareil comprenant au moins un générateur d'électricité photovoltaïque (6), une unité électronique de mesure (4) et au moins un capteur de mesure (3) raccordé à l'unité électronique de mesure (4), **caractérisé en ce qu'**il comprend un dispositif d'alimentation (10) selon l'une des revendications 1 à 8 dont l'entrée (11) est raccordée au générateur d'électricité et la sortie d'alimentation (12) à l'unité électronique de mesure (4).

10. Appareil électronique de mesure selon la revendication 9, **caractérisé en ce qu'**il comprend un dispositif d'alimentation (10) selon la revendication 8 dont la sortie de surveillance (31) est raccordée à l'unité électronique de mesure (4) qui est adaptée pour émettre un signal visuel et/ou sonore si la tension surveillée devient inférieure à un seuil prédéterminé.

11. Appareil électronique de mesure selon la revendication 9 ou 10, **caractérisé en ce que** chaque capteur de mesure (3) est un capteur à transducteur résistif et **en ce que** l'unité électronique de mesure (4) est adaptée pour déterminer la variation de la résistance électrique de chaque transducteur résistif de chaque capteur en fonction du temps de charge ou décharge d'un condensateur de capacité connue au travers du transducteur résistif et pour déterminer en fonction des variations de résistance déterminées la valeur de la grandeur physique mesurée.

12. Appareil électronique de mesure selon la revendication 11, **caractérisé en ce qu'**il est adapté pour réaliser au moins une pesée et **en ce qu'**il comprend :

   - au moins un plateau de mesure (1),
   - au moins un socle (2),
   - au moins trois capteurs (3) de mesure de poids à jauge extensométrique résistive qui sont interposés entre le plateau de mesure (1) et le socle (2) et qui sont équipés de moyen de raccordement électrique des jauges extensométriques à l'unité électronique de mesure qui est adaptée pour déterminer en fonction des valeurs de résistance déterminées la valeur de la charge appliquée au plateau (1).

13. Appareil électronique de mesure selon la revendication 12, **caractérisé en ce qu'**il comprend un unique plateau de mesure (1) et au moins trois socles (2) formant chacun un pied, chaque socle (2) étant associé à un capteur de mesure de poids (3).

14. Appareil électronique de mesure selon la revendication 12 ou 13, **caractérisé en ce que** le plateau (1) comprend au moins une fenêtre transparente sous laquelle est disposé un générateur photovoltaïque.

15. Appareil électronique de mesure selon une des revendications 9 à 14 **caractérisé en ce qu'**il s'agit d'une balance de cuisine dont la pesée maximale est de 5kg ou **en ce qu'**il s'agit d'un pèse-personne dont la pesée maximale est de 160 kg.

FIG.1

FIG.2

FIG.3

EP 2 403 106 A2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008009794 A
- EP 1251357 A
- US 6690183 B